# EUROPÄISCHE PATENTANMELDUNG

(11) **EP 3 886 275 A1**
(43) Veröffentlichungstag der Anmeldung: **29.09.2021**
(21) Anmeldenummer: 20166455.4
(22) Anmeldetag: 27.03.2020
(51) Int. Cl.: H02B 5/06, H02B 13/035, H02B 13/045, H02B 1/52

(54) **TRANSPORTIERBARES, GASISOLIERTES SCHALTFELD**

(71) Anmelder: SPIE Operations, 95863 Cergy-Pontoise Cedex (FR); ABB Power Grids Switzerland AG, 5400 Baden (CH); TenneT TSO GmbH, 95448 Bayreuth (DE)
(72) Erfinder: Nast, Peter, 30657 Hannover (DE); Hildebrandt, Karsten, 17375 Ahlbeck (DE); Kallweit, René, 8200 Schaffhausen (CH); Schindlbeck, Martin, 84092 Bayerbach (DE); Pritscher, Anton, 84030 Ergolding (DE)
(74) Vertreter: Andrejewski - Honke Patent- und Rechtsanwälte Partnerschaft mbB

(57) **Zusammenfassung**

Ein mobiles, gasisoliertes Schaltfeld (1) für die Hoch- oder Höchstspannung umfasst wenigstens zwei mobile Schaltpole (2). Die zwei Schaltpole (2) weisen jeweils eine Schalteinheit (3) auf, wobei jede der zwei Schalteinheiten (3) jeweils einen Innenleiter zur Führung von Strömen im Hoch- oder Höchstspannungsbereich sowie eine gasdichte Kapselung (4) aufweist. Jeder der Innenleiter ist von der jeweiligen Kapselung (4) umschlossen, wobei ein Zwischenraum zwischen dem Innenleiter und der jeweiligen Kapselung (4) mit einem Isolationsgas befüllbar bzw. befüllt ist, sodass jeder der Innenleiter gasisolierbar bzw. gasisoliert ist. Die zwei Kapselungen (4) sind nicht über ein gemeinsames Kapselungsteil oder über mehrere gemeinsame Kapselungsteile miteinander verbunden, sodass die beiden Kapselungen (4) unabhängig voneinander sind.

## Beschreibung

Die Erfindung betrifft ein mobiles, gasisoliertes Schaltfeld für die Hoch- oder Höchstspannung, umfassend wenigstens zwei mobile Schaltpole, wobei die zwei Schaltpole jeweils eine Schalteinheit aufweisen, wobei jede der zwei Schalteinheiten einen Innenleiter zur Führung von Strömen im Hoch- oder Höchstspannungsbereich sowie eine gasdichte Kapselung aufweist, wobei jeder der zwei Innenleiter von der jeweiligen Kapselung umschlossen ist, wobei ein Zwischenraum zwischen jedem Innenleiter und der jeweiligen Kapselung mit einem Isolationsgas befüllbar bzw. befüllt ist, so dass jeder der Innenleiter gasisolierbar bzw. gasisoliert ist. Die Erfindung betrifft auch die Verwendung eines gasisolierten Schaltfelds zur Installation in einer Freiluftschaltanlage.

Derartige mobile Schaltfelder sind bereits in JP 2001-145219 A beschrieben. Kompakte Schalteinheiten eines Schaltfeldes sind auf einem Gestell angeordnet. Das Schaltfeld umfasst insbesondere eine gasdichte Kapselung. Innerhalb der Kapselung erstreckt sich ein Innenleiter mit Schaltern und Leitungen, welcher von einem Isolationsgas umgeben ist. Die Kapselung selbst weist sechs Anschlüsse für die Befestigung von Freiluftdurchführungen auf. Ein ähnliches zweites mobiles Schaltfeld ist für den besonders kurzzeitigen Einsatz konzipiert und dafür auf einem Tieflader angeordnet. Auf dem Tieflader befindet sich außerdem auch ein Schaltschrank zur Ansteuerung des zweiten mobilen Schaltfeldes.

Der Nachteil des zweiten, bekannten mobilen Schaltfeldes besteht darin, dass dessen Einsatzzeit aufgrund der Einsatzbindung des Tiefladers auf einige Tage oder wenige Wochen beschränkt ist. Dafür muss das zweite mobile Schaltfeld nach der Ankunft nur noch mit den Freiluftleitungen verbunden werden, so dass ein Einsatz innerhalb eines Tages nach der Ankunft möglich ist. Solche mobilen Schaltfelder eignen sich insbesondere für den Einsatz nach Katastrophenfällen.

Demgegenüber ist das erste, bekannte mobile Schaltfeld ohne Weiteres für den Einsatz über Monate oder Jahre hinweg geeignet. Allerdings bedarf es auch eines größeren Installationsaufwandes. So ist das erste, auf dem Gestell aufgesetzte Schaltfeld turmartig konstruiert und in dieser Form nicht oder nur sehr bedingt transportabel. Das Gestell und die Kapselung werden daher in aller Regel erst vor Ort aufgebaut, was die Installationszeit schon aufgrund der erforderlichen maschinellen Hilfe erheblich verlängert. Außerdem muss der Schaltschrank separat installiert werden, was wiederum Installationszeit in Anspruch nimmt.

Außerdem ist beiden bekannten mobilen Schaltfeldern gemein, dass sie insbesondere nicht für die Höchstspannung (> 200kV) ausgelegt sind, was v.a. an den geringen Abständen der Freiluftdurchführungen zueinander sowie an der sehr kompakten Bauweise der Gehäuse erkennbar ist. Aber auch die Eignung für weite Bereiche der Hochspannung (> 52kV) erscheint äußerst fraglich - insbesondere der Bereich oberhalb von 100kV dürfte jenseits der Eignung der beiden bekannten mobilen Schaltfelder liegen.

Im Rahmen der Energiewende stehen die Netzbetreiber vor der Herausforderung, die elektrischen Übertragungssnetze an die zunehmend volatilere Erzeugung elektrischer Energie anzupassen, indem die Übertragungsnetze deutlich flexibler gestaltet werden. Ein besonders wichtiger Baustein der Übertragungsnetze sind Schaltanlagen wie Umspannwerke oder Lastverteilerwerke und damit auch Schaltanlagen des Hoch- und Höchstspannungsnetzes, welche zumeist als Freiluftanlagen ausgebildet sind. Aufgrund der Hoch- bzw. Höchstspannung müssen besondere Sicherheitsvorkehrungen bei Wartungs-, Reparatur- und Ausbauarbeiten getroffen werden (große Mindestabstände und Bauteile, gründliche Planung und längerer Vorlauf, etc.), so dass ausgerechnet dieser besonders wichtige Baustein der Übertragungsnetze von einer entsprechenden Unflexibilität betroffen ist. Die Schaltanlagen des Hoch- und Höchstspannungsnetzes können durch Einbau weiterer Schaltfelder und der damit einhergehenden zusätzlichen Schaltmöglichkeiten deutlich flexibler gestaltet werden. Die Einsatzdauer dieser weiteren Schaltfelder beträgt typischerweise Monate oder Jahre, so dass grundsätzlich das erste, bekannte mobile Schaltfeld aus JP 2001-145219 A in Betracht kommt, sofern dieses an Hoch- bzw. Höchstspannungen angepasst ist.

Solche gasisolierten Schaltfelder für die Höchstspannung sind allerdings röhrenförmig und damit sehr sperrig ausgebildet, wie dies beispielsweise aus WO 2005 / 083 859 A1 hervorgeht. Derartige Schaltfelder können in der montierten oder eher teilmontierten Form allenfalls per aufwändigem Sondertransport geliefert werden, so dass eine möglichst geringe Installationszeit anfällt. Alternativ ist der Transport des in Einzelteile zerlegten Schaltfeldes möglich. Eine Zerlegung in Einzelteile ist jedoch nach Möglichkeit zu vermeiden, weil hierdurch die Installationszeit vor Ort deutlich verlängert wird. Dies wiederum kann zu nicht unerheblichen Beeinträchtigungen des Umspann- oder Lastverteilerwerks führen, weil innerhalb der entsprechenden Schaltanlage Teilbereiche für die Installation deaktiviert werden müssen.

Der Erfindung liegt daher die Aufgabe zugrunde, ein Schaltfeld anzugeben, welches innerhalb kürzester Zeit - beispielsweise innerhalb von ein oder zwei Wochen - in ein Umspann- oder Lastverteilerwerk integriert werden kann und gleichzeitig mit einem möglichst geringen Aufwand, insbesondere unter Vermeidung von genehmigungspflichtigen Fahrten, transportabel ist.

Diese Aufgabe bzw. diese Aufgaben wird bzw. werden gelöst durch ein mobiles, gasisoliertes Schaltfeld für die Hoch- oder Höchstspannung, umfassend wenigstens zwei mobile Schaltpole, wobei die zwei Schaltpole jeweils eine Schalteinheit aufweisen, wobei jede der zwei Schalteinheiten einen Innenleiter zur Führung von Strömen im Hoch- oder Höchstspannungsbereich sowie eine gasdichte Kapselung aufweist, wobei jeder der zwei Innenleiter von der jeweiligen Kapselung umschlossen ist, wobei ein Zwischenraum zwischen jedem Innenleiter und der jeweiligen Kapselung mit einem Isolationsgas befüllbar bzw. befüllt ist, so dass jeder der Innenleiter gasisolierbar bzw. gasisoliert ist,
dadurch gekennzeichnet, dass
die zwei Kapselungen nicht über ein gemeinsames Kapselungsteil oder mehrere gemeinsame Kapselungsteile miteinander verbunden sind, so dass die beiden Kapselungen unabhängig voneinander sind.

Der Begriff "mobil" meint vorzugsweise, dass ein Schaltpol bzw. ein Modul eines Schaltpols mittels eines Lastwagens oder Tiefladers transportierbar ist und weiter vorzugsweise ohne Sondergenehmigung transportierbar ist. Das Wort "mobil" bedeutet bevorzugt, dass der Schaltpol bzw. das Modul des Schaltpols im Ganzen transportierbar ist, so dass vorteilhafterweise der Schaltpol bzw. das Modul des Schaltpols vor Ort nicht erst zusammengesetzt werden muss und dass besonders vorzugsweise vor Ort weitgehend noch bzw. lediglich noch Anschlussarbeiten durchgeführt werden müssen. Ein Schaltpol umfasst zweckmäßigerweise Primärtechnik und Sekundärtechnik. Der Begriff "Primärtechnik" meint vorzugsweise die Innenleiter und die Kapselungen. Das Wort "Sekundärtechnik" bedeutet bevorzugt Peripherietechnik der Primärtechnik, worunter beispielsweise die Komponenten der Ansteuerung der Primärtechnik fallen. Hierzu gehören z. B. Schaltschränke sowie elektrische Verbindungen zwischen Schalt-schränken und Antrieben der Primärtechnik. Es ist von Vorteil, dass der Begriff "mobil" bedeutet, dass die Primärtechnik des Schaltpols bzw. eines Moduls des Schaltpols am Einsatzort nicht erst zusammengesetzt werden muss. Es ist im Rahmen der Erfindung und insbesondere vom Begriff "mobil" umfasst, dass Freiluftdurchführungen erst am Einsatzort an den Schaltpolen montiert werden. Es ist im Rahmen der Erfindung, dass die Sekundärtechnik am Einsatzort wenigstens teilweise zusammengesetzt werden muss.

Der Ausdruck "gemeinsames Kapselungsteil" meint bevorzugt gasdichte Verbindungskörper zwischen zwei oder drei Schaltpolen bzw. zwischen zwei oder drei Schalteinheiten. Es ist bevorzugt, dass jegliche gasdichten Verbindungskörper zwischen den Schaltpolen fehlen. Vorteilhafterweise werden keine Elemente der Innenleiter bzw. der Schalteinheiten bzw. der Kapselungen von den Schaltpolen gemeinsam genutzt.

Der Ausdruck "wobei die zwei Kapselungen nicht über ein gemeinsames Kapselungsteil oder mehrere gemeinsame Kapselungsteile miteinander verbunden sind" meint vorzugsweise, dass die jeweilige Primärtechnik der Schaltpole getrennt voneinander ausgebildet ist bzw. die beiden Kapselungen getrennt voneinander ausgebildet sind. Es ist besonders bevorzugt, dass keine Isolationsgasverbindung zwischen den wenigstens zwei Schaltpolen vorliegt. Das Wort "Isolationsgas" meint beispielsweise Schwefelhexafluorid, umfasst allerdings auchalle anderen geeigneten Gase oder Gasmischungen.. Der Begriff "Isolationsgasverbindung" meint vorzugsweise eine permanente, durchgängige Verbindung zwischen zwei Schaltpolen oder aber eine über Ventile abgesicherte Verbindung. Es ist insbesondere von Vorteil, dass die zwei Kapselungen nicht über ein gemeinsames Teil der Primärtechnik oder mehrere gemeinsame Teile der Primärtechnik miteinander verbunden sind. Es ist bevorzugt, dass die Primärtechnik eines Schaltpols dergestalt unabhängig ist von der Primärtechnik des anderen Schaltpols, so dass es einer Verbindung zwischen der Primärtechnik des ersten Schaltpols und der Primärtechnik des zweiten Schaltpols über Teile der Primärtechnik nicht bedarf.

Der Erfindung liegt die Erkenntnis zugrunde, dass die eingangs genannte Aufgabe einen neuen, radikalen Lösungsansatz erfordert. Dieser besteht darin, das bisher stets als ein ganzes ausgebildete Schaltfeld mit einer großen, gemeinsamen Kapselung gemäß der Erfindung nun polweise aufzuteilen, so dass jeder der wenigstens zwei oder wenigstens drei Schaltpole eine eigene, unabhängige Kapselung erhält. Durch die Entkopplung kann jede der drei Schalteinheiten länglich ausgebildet werden, so dass ein Transport per Tieflader möglich wird, aber gleichzeitig ein aufwändiger Sondertransport (Genehmigung, Streckenvorbereitung, etc.) nicht notwendig ist. Insbesondere müssen die Schaltpole im Wesentlichen nur noch mit der Schaltanlage verbunden werden, so dass vor Ort die Installationsschritte bzgl. der Verbindung der Schaltpole untereinander nahezu vollständig entfallen. Damit wird die Installationszeit trotz verhältnismäßig geringem Transportaufwand entscheidend verringert, so dass die eingangs genannte Aufgabe gelöst wird. Es wurde insbesondere gefunden, dass die Verringerung dieses Transport- und Installationsaufwandes entscheidender ist als die Verringerung des Herstellungsaufwandes über das Vorsehen von Schaltfeldkomponenten, welche von den Schaltpolen gemeinsam genutzt werden.

Bevorzugt weist jeder Schaltpol eine Länge L, eine breite B und eine Höhe H auf. Es ist vorteilhaft, dass alle drei Schaltpole dieselbe Länge L, dieselbe Breite B und dieselbe Höhe H aufweisen. Ebenso ist es möglich, dass die drei Schaltpole unterschiedliche Längen L, unterschiedliche Breiten B und unterschiedliche Höhen H aufweisen.

Es ist vorteilhaft, dass bauliche Verbindungen zwischen den Schaltpolen fehlen. Der Ausdruck "bauliche Verbindung" meint bevorzugt jegliche Verbindung jenseits von elektrischen oder gasdichten Verbindungen. Vorzugsweise sind mit diesem Ausdruck insbesondere jene Verbindungen gemeint, die der mechanischen Stabilität dienen. Es ist besonders bevorzugt, dass das Fehlen von baulichen Verbindungen dazu führt, dass die Schaltpole separat voneinander transportierbar sind und dass vorzugsweise Installationsschritte zur baulichen Verbindung der Schaltpole vor Ort entfallen. Es liegt im Rahmen der Erfindung, dass die Schaltpole nebeneinander aufgestellt sind und zweckmäßigerweise wenigstens 50 cm Abstand zueinander haben. Vorteilhafterweise die drei Schaltpole so aufgestellt, dass sie bezüglich ihrer Längenrichtung stufenartig versetzt zueinander ausgerichtet sind.

Es ist besonders bevorzugt, dass wenigstens einer der Schaltpole eine Begrenzung umfasst, wobei die Begrenzung die Kapselung dieses Schaltpols wenigstens abschnittsweise in wenigstens zwei und vorzugsweise in drei Dimensionen umgreift. Der Ausdruck "wenigstens ein Schaltpol" weist bevorzugt zwei oder drei oder alle Schaltpole. Es ist vorteilhaft, dass kein Element der Schalteinheit in einer Frontalansicht und/oder in einer Seitenansicht des Schaltpols die Begrenzung des Schaltpols nach rechts und/oder links und/oder oben überragt. Die Begrenzung umfasst vorzugsweise einen Rahmen und/oder Seitenwände. Vorzugsweise weist die Begrenzung lediglich einen Rahmen auf. Gemäß einer Ausführungsform umfasst die Begrenzung Seitenwände, sodass der Schaltpol beheizbar ausgebildet ist. Es ist vorteilhaft, wenn die Begrenzung bzw. der Rahmen wenigstens zwei Seitenelemente und/oder wenigstens ein Deckenelement und/oder wenigstens ein Bodenelement umfasst.

Gemäß einer besonders bevorzugten Ausführungsform ist wenigstens einer der Schaltpole in ein erstes Modul und ein zweites Modul teilbar. Der Begriff "Modul" meint insbesondere vorgefertigte Elemente, die der erleichterten Zusammensetzbarkeit dienen, sodass die Module einfacher miteinander verbunden werden können als nicht modulartig ausgebildete entsprechende Baugruppen. Vorzugsweise umfasst das erste Modul einen/den Leistungsschalter. Es ist bevorzugt, dass das zweite Modul einen/den Schaltschrank und/oder einen/den Spannungswandler und/oder einen/den Stromwandler aufweist. Zweckmäßigerweise besitzen beide Module jeweils zwei Längsseiten und jeweils zwei Stirnseiten. Vorzugsweise umfasst jedes Modul eine äußere Stirnseite sowie eine Koppelstirnseite. Es ist bevorzugt, dass die Koppelstirnseiten der beiden Module so ausgebildet sind, dass sie miteinander koppelbar sind.

Der Schaltpol kann, vorzugsweise im Bereich der beiden Koppelstirnseiten der Module, eine Verbindungsstelle und/oder eine Kupplungsstelle und/oder eine Schnittstelle aufweisen. Es ist bevorzugt, dass die Module den Schaltpol der Länge nach teilen. Das erste Modul mag die Länge L1 aufweisen, während dem zweiten Modul die Länge L2 zugeordnet sein kann. Zweckmäßigerweise ergibt eine Addition der Längen L1 und L2 die Länge L des Schaltpols. Es ist möglich, dass ein Schaltpol in mehr als zwei Module der Länge nach teilbar ist, wobei allerdings lediglich zwei Module je Schaltpol bevorzugt sind. Die Längen L1 bzw. L2 entsprechen bevorzugt wenigstens einem Fünftel/Viertel/Drittel der Länge L. Die Längen L1 bzw. L2 entsprechen vorzugsweise höchstens 4/5 L bzw. 3/4 L bzw. 2/3 L. Es ist bevorzugt, dass die Längen L1 bzw. L2 der Länge L/2 + - 20 % entsprechen. Es ist besonders bevorzugt, dass die Verbindungsstelle und/oder die Kupplungsstelle und/oder die Schnittstelle in einem mittleren Drittel/Viertel/Fünftel der Länge L des Schaltpols befindlich ist. Es ist sehr bevorzugt, dass die Länge L des Schaltpols durch die bzw. durch eine Begrenzung definiert wird.

Vorteilhafterweise besitzt wenigstens einer der Schaltpole in der Draufsicht ein Verhältnis von der Länge L zu der Breite B > 2, vorzugsweise > 3 und besonders vorzugsweise > 4. Gemäß einer ganz besonders bevorzugten Ausführungsform ist das Verhältnis aus der Länge L zu der Breite B > 5. Es ist besonders bevorzugt, dass wenigstens einer der Schaltpole in der Draufsicht Abmessungen aufweist, welche 40"-Containern entsprechen. Vorzugsweise entsprechen die Abmessungen der beiden Module in der Draufsicht jeweils einem 20"-Container. Die Höhe des Schaltpols ohne Freiluftdurchführungen beträgt vorzugsweise maximal 3,5 m/3,0 m/2,7 m. Die Breite B wenigstens eines Schaltpols beträgt bevorzugt höchstens 3 m/2,7 m/2,5 m.

Gemäß einer besonders bevorzugten Ausführungsform umfasst die Begrenzung wenigstens eines der Schaltpole eine Verbindungsstelle, wobei die Verbindungsstelle eine Verbindung der Module darstellt. Es ist bevorzugt, dass die Verbindungsstelle durch die zwei Koppelstirnseiten der Module gebildet wird. Zweckmäßigerweise umfasst die jeweilige Koppelstirnseite der Module wenigstens ein Seitenelement und/oder ein Deckenelement. Zweckmäßigerweise korrespondieren ein Seitenelement der Koppelstirnseite des ersten Moduls und ein Seitenelement der Koppelstirnseite des zweiten Moduls miteinander und sind miteinander verbunden. Vorzugsweise korrespondieren ein Deckenelement der Koppelstirnseite des ersten Moduls und ein Deckenelement der Koppelstirnseite des zweiten Moduls miteinander und sind miteinander verbunden. Die Seitenelemente bzw. Deckenelemente der Verbindungsstelle sind zweckmäßigerweise reversibel miteinander, beispielsweise über Schraubverbindungen, verbunden. Es ist möglich, dass die Seitenelemente bzw. Deckenelemente der Verbindungsstelle irreversibel, beispielsweise mittels Schweißung, miteinander verbunden sind.

Es ist besonders bevorzugt, dass die Schalteinheit wenigstens eines der Schaltpole eine Kupplungsstelle aufweist, wobei die Kupplungsstelle eine Verbindung der Module darstellt. Die Kupplungsstelle ist bevorzugt zwischen einem/dem Leistungsschalter und einem/dem Stromwandler oder einem/dem Spannungswandler angeordnet. Besonders vorzugsweise befindet sich die Kupplungsstelle zwischen einem/dem Leistungsschalter und einem/dem Stromwandler und weiter bevorzugt zwischen dem Stromwandler und einem Verlängerungselement der Schalteinheit, welches den Stromwandler mit den Leistungsschalter verbindet. Die Kupplungsstelle umfasst vorzugsweise eine weiche bzw. elastische Manschette, welche bevorzugt als Gummimanschette ausgebildet ist. Es ist bevorzugt, dass die Kupplungsstelle zwei Flansche aufweist. Zweckmäßigerweise sind die beiden Flansche mittels axialer Verbindungselemente, beispielsweise Schraubverbindungen, miteinander verbunden. Es ist bevorzugt, dass die Manschette zwischen den Flanschen der Kupplungsstelle angeordnet ist, wobei vorzugsweise die länglichen Verbindungselemente einen Anpressdruck auf die Manschette ausüben. Es liegt im Rahmen der Erfindung, dass die beiden Flansche über eine Kurzschlussverbindung, beispielsweise in Form eines Kupferbandes, miteinander verbunden sind. Es ist sehr bevorzugt, dass die Kupplungsstelle sowohl die Innenleiter als auch die Kapselungen der beiden Module miteinander verbindet. Es ist besonders bevorzugt, dass die Kupplungsstelle einen Schiebeadapter umfasst. Es ist gemäß einer Ausführungsform vorgesehen, dass die Flansche der Kupplungsstelle einander berühren.

Gemäß einer besonders bevorzugten Ausführungsform weist wenigstens einer der Schaltpole eine elektrische Schnittstelle für eine Mehrzahl an elektrischen Kabeln auf, wobei die Schnittstelle eine Verbindung der Module darstellt. Die Schnittstelle weist vorzugsweise eine Mehrzahl an Steckerplätzen auf, wobei vorzugsweise erste Steckerplätze dem ersten Modul und zweite Steckerplätze dem zweiten Modul zugeordnet sind. Es ist besonders bevorzugt, dass einige der ersten Steckerplätze mit einigen der zweiten Steckerplätze elektrisch verbunden sind, sodass wenigstens zwei Steckerkabel über die Schnittstelle miteinander verbunden werden können. Es ist sehr bevorzugt, dass die Schnittstelle als Steckertafel ausgebildet ist. Die Schnittstelle besitzt vorzugsweise eine erste Seite und eine zweite Seite, wobei vorteilhafterweise die erste Seite dem ersten Modul zugeordnet bzw. zugewandt ist, und bevorzugt die zweite Seite dem zweiten Modul zugeordnet bzw. zugewandt ist. Zweckmäßigerweise ist die Schnittstelle bzw. die Steckertafel senkrecht bzw. etwa senkrecht ausgerichtet. Es ist ganz besonders bevorzugt, dass das zweite Modul einen/den Schaltschrank aufweist. Vorzugsweise verbindet ein erstes Kabel den Schaltschrank mit der Schnittstelle. Zweckmäßigerweise verbindet die Schnittstelle ein zweites Kabel mit dem ersten Kabel. Vorzugsweise verbindet das zweite Kabel einen Antrieb einer Komponente der Schalteinheit des ersten Moduls mit der Schnittstelle. Es ist sehr bevorzugt, dass Stecker der Kabel freilufttauglich und/oder verpolungssicher und/oder kodierbar bezüglich der Kabelpole sind.

Es ist sehr bevorzugt, dass untere Abschnitte der Schalteinheit wenigstens eines der Schaltpole in einer unteren Ebene und obere Abschnitte der Schalteinheit in einer oberen Ebene angeordnet sind. Die unteren Abschnitte der Schalteinheit umfassen vorzugsweise den Leistungsschalter und/oder den Antrieb des Leistungsschalters. Die oberen Abschnitte der Schalteinheit weisen bevorzugt einen/den Stromwandler und/oder wenigstens zwei Trennerdungsschalter und/oder einen/den Spannungswandler und/oder Leistungsanschlüsse für Freiluftdurchführungen und/oder ein/das Verlängerungselement und/oder eine/die Kupplungsstelle und/oder ein/das in der Draufsicht s-förmiges (s) Winkelelement auf. Es ist besonders bevorzugt, dass in der Draufsicht und in Längsrichtung des Schaltpols wenigstens einer der oberen Abschnitte wenigstens einen der unteren Abschnitte überlappt. Gemäß einer besonders bevorzugten Ausführungsform überlappt das Verlängerungselement in der Draufsicht und in Längsrichtung des Schaltpols einen/den Antrieb eines/des Leistungsschalters.

Es ist bevorzugt, dass der Antrieb des Leistungsschalters einem koppelstirnseitigen Ende des Leistungsschalters zugeordnet ist. Zweckmäßigerweise entspricht der Antrieb des Leistungsschalters einer Verlängerung des Leistungsschalters in axialer bzw. Längsrichtung des Leistungsschalters. Ein dem Antrieb des Leistungsschalters abgewandtes Ende des Leistungsschalters ist vorzugsweise der äußeren Stirnseite des ersten Moduls zugewandt. Der Antrieb des Leistungsschalters ist vorteilhafterweise dem Schaltschrank bzw. dem zweiten Modul zugewandt.

Es ist bevorzugt, dass der Leistungsschalter wenigstens einen und vorzugsweise zwei nach oben gerichtete Anschlüsse aufweist. Ein erster Anschluss des Leistungsschalters ist der Koppelstirnseite des ersten Moduls zugeordnet und bevorzugt in der Seitenansicht als s-förmiges Winkelelement, insbesondere mit einem Kreuzbaustein, ausgebildet. Das Winkelelement des ersten Anschlusses des Leistungsschalters ist vorzugsweise mit einem/dem Verlängerungselement verbunden und erzeugt bevorzugt einen Übergang von der unteren in die obere Ebene der Schalteinheit. Der zweite Anschluss des Leistungsschalters ist bevorzugt dem äußeren Stirnende des ersten Moduls zugeordnet und vorzugsweise nach oben gerichtet. Der zweite Anschluss des Leistungsschalters ist vorzugsweise in einer Frontansicht des Schaltpols als Kreuzbaustein mit zwei Abgängen ausgestaltet. Es ist bevorzugt, dass die beiden Abgänge des Kreuzbausteins mit Trennerdungsschaltern der sammelschienenseitigen Leistungsanschlüsse bzw. Freiluftdurchführungen verbunden sind.

Es ist sehr bevorzugt, dass die Begrenzung wenigstens ein Seitenelement und/oder wenigstens ein Bodenelement und/oder wenigstens ein Deckenelement umfasst. Es ist sehr bevorzugt, dass die Begrenzung einen Rahmen umfasst, welcher das Seitenelement bzw. die Seitenelemente und das Deckenelement bzw. die Deckenelemente aufweist. Das Seitenelement bzw. die Seitenelemente sind bevorzugt als Streben ausgebildet, welche die Schalteinheit seitlich (in einer Seitenansicht und/oder in einer Frontalansicht) begrenzen und sich der Länge nach in Höhenrichtung erstrecken. Es ist vorzugsweise eine Mehrzahl an Seitenelementen bzw. Streben auf beiden Längsseiten und Stirnseiten des Schaltpols angeordnet. Die Seitenelemente bzw. Deckenelemente bzw. Streben sind bevorzugt rohrartig ausgebildete Elemente, welche weiter bevorzugt als Vierkantrohre ausgestaltet sind. Zweckmäßigerweise umfassen beide Module wenigstens zwei und vorzugsweise wenigstens drei Seitenelemente je Längsseite. Es ist möglich, dass beide Module je Stirnseite zwei Seitenelemente aufweisen, wobei die beiden Seitenelemente der Stirnseiten bevorzugt zugleich Seitenelemente der Längsseiten sind.

Es ist besonders bevorzugt, wenn die Module jeweils wenigstens ein diagonales Stützelement zwischen wenigstens einigen der Seitenelemente aufweisen. Diagonale Stützelemente können beispielsweise Diagonalstreben oder Stützkreuze sein.

Es ist sehr bevorzugt, dass wenigstens ein Schaltpol wenigstens zwei Bodenelemente aufweist, wobei die beiden Bodenelemente jeweils einem der beiden Module zugeordnet sind. Die Bodenelemente sind vorzugsweise flächige Elemente, welche die Schalteinheit nach unten begrenzen und sich der Länge nach etwa parallel zum Boden erstrecken. Die Bodenelemente mögen Stahlträger aufweisen und beispielsweise durch Gitterelemente eine Bodenfläche aufspannen. Es ist bevorzugt, dass das Bodenelement bzw. die Bodenelemente die Seitenelemente tragen. Es ist vorteilhaft, wenn das Bodenelement bzw. die Bodenelemente Öffnungen für die Aufnahme von Transportmitteln, beispielsweise Ketten oder Seile, aufweisen.

Das wenigstens eine Deckenelement ist zweckmäßigerweise eine Strebe, welches sich der Länge nach wenigstens abschnittsweise waagerecht bzw. in einer Richtung parallel zum Bodenelement erstreckt. Das Deckenelement mag die Schalteinheit bzw. den Schaltpol nach oben hin zumindest längenabschnittsweise begrenzen. Das Deckenelement ist vorzugsweise rohrartig ausgebildet und mag beispielsweise ein Vierkantrohr sein. Es ist sehr bevorzugt, dass jeder Längsseite und jeder Stirnseite jedes Moduls wenigstens ein Deckenelement zugeordnet ist. Vorteilhafterweise stützen diagonale Stützelemente wenigstens eines der Deckenelemente an wenigstens einem der Seitenelemente ab. Diagonale Stützelemente können z.B. diagonale Streben oder Stützkreuze sein.

Vorzugsweise umfasst wenigstens ein Schaltpol bzw. das erste Modul dieses Schaltpols einen Stützrahmen, welcher wenigstens einen der Leistungsanschlüsse bzw. wenigstens eine der Freiluftdurchführungen abstützt. Es ist besonders bevorzugt, dass der Abgang bzw. Doppelabgang des sammelschienenseitigen Endes des Leistungsschalters von dem Stützrahmen gestützt wird. Es ist bevorzugt, dass Seitenelemente und/oder Deckenelemente der Begrenzung mit dem Stützrahmen verbunden sind. Der Stützrahmen mag Seitenelemente und/oder Deckenelemente und/oder diagonale Stützelemente aufweisen. Es ist bevorzugt, dass die Begrenzung in einer Draufsicht den Stützrahmen wenigstens hilfsweise und bevorzugt vollständig umschließt. Es ist möglich, dass der Stützrahmen die Begrenzung in einer Seitenansicht teilweise überragt.

Gemäß einer bevorzugten Ausführungsform ist die Kapselung wenigstens stellenweise aufgehängt. Es ist vorteilhaft, dass die Kapselung in einer mittleren Hälfte/ in einem mittleren Drittel/Viertel/Fünftel/Sechstel der Länge L des Schaltpols aufgehängt ist. Es ist sehr bevorzugt, dass eine erste Aufhängung dem ersten Modul zugeordnet ist. Zweckmäßigerweise ist eine zweite Aufhängung dem zweiten Modul zugeordnet. Es ist von Vorteil, wenn eine der beiden Aufhängungen an einem oberen Ende der Kapselung befestigt ist. Es ist bevorzugt, wenn eine der Aufhängungen an beiden Seiten der Kapselung befestigt ist. Gemäß einer besonders bevorzugten Ausführungsform ist die Kupplungsstelle der Schalteinheit zwischen den beiden Aufhängungen angeordnet. Vorteilhafterweise bietet wenigstens eine der Aufhängungen mehrere Freiheitsgrade zur mechanisch spannungsfreien Befestigung der Kapselung auf. Es ist sehr bevorzugt, wenn eine der Aufhängungen an einem/dem Verlängerungselement befestigt ist. Zweckmäßigerweise ist eine der beiden Aufhängungen an einem/dem Stromwandler befestigt.

Es ist sehr vorteilhaft, wenn wenigstens einer der Schaltpole einen Schaltschrank umfasst. Zweckmäßigerweise wird der Schaltschrank wenigstens abschnittsweise von der Begrenzung in wenigstens zwei Dimensionen umgriffen. Es ist bevorzugt, dass der Schaltschrank in einer Seitenansicht und/oder in einer Frontalansicht des Schaltpols die Begrenzung nicht nach links und/oder rechts und/oder oben überragt. Es ist sehr bevorzugt, dass der Schaltschrank den zweiten Modul zugeordnet ist. Zweckmäßigerweise ist der Schaltschrank einer Längsseite des zweiten Moduls bzw. des Schaltpols zugeordnet, während der Spannungswandler der anderen Längsseite des Schaltpols bzw. Moduls zugeordnet ist. Es ist vorteilhaft, dass der Schaltschrank und/oder der Spannungswandler der äußeren Stirnseite des zweiten Moduls zugeordnet sind, wobei vorzugsweise der Stromwandler der Koppelstirnseite des zweiten Moduls zugeordnet ist. Es ist von Vorteil, wenn der Stromwandler in der Draufsicht im Wesentlichen in einem mittleren Bereich zwischen den Längsseiten angeordnet ist. Vorteilhafterweise ist ein Winkelelement zwischen dem Stromwandler und dem Spannungswandler angeordnet, sodass der Spannungswandler einer Längsseite zugeordnet ist. Es ist bevorzugt, dass zwischen dem Spannungswandler und dem Winkelelement des zweiten Moduls ein Leistungsanschluss für eine Freiluftdurchführung und/oder ein Trennerdungsschalter angeordnet ist.

Es liegt im Rahmen der Erfindung, dass die Schaltpole über elektrische Verbindungen miteinander verbunden sind. Die elektrischen Verbindungen umfassen vorzugsweise Kurzschlussverbindungen, beispielsweise in Form von Kupferbändern, und/oder Daten- und/oder Energieleitungen für Antriebe der Schalteinheit. Zweckmäßigerweise ist einer der drei Schaltpole ein Hauptschaltpol, wobei der Schaltschrank des Hauptschaltpols ein Hauptschaltschrank ist. Der Hauptschaltschrank mag über die elektrischen Verbindungen mit dem wenigstens einen anderen Schaltschrank des anderen Schaltpols verbunden sein. Der Hauptschaltschrank ist vorzugsweise mit einer Steuerung verbunden, welche beispielsweise in einem Container angeordnet ist. Die Steuerung ist zweckmäßigerweise Bestandteil des Schaltfelds. Der Steuerung mag ein Koppelschrank zugeordnet sein, welcher den Hauptschaltschrank mit der Steuerung verbindet. Die Steuerung umfasst zweckmäßigerweise einen Leitrechner und/oder Schutztechnik und wird vorzugsweise mit einer Hilfsspannung versorgt.

Es liegt im Rahmen der Erfindung, dass die Schalteinheit von wenigstens einem der Schaltpole einen Leistungsschalter und/oder wenigstens zwei Trennerdungsschalter und/oder einen Stromwandler und/oder einen Spannungswandler und/oder ein Verlängerungselement und/oder wenigstens zwei Winkelelemente und/oder mehrere Kreuzbausteine und/oder einen Antrieb für den Leistungsschalter umfasst. Ausgehend von einem Ende des Schaltpols, welches beispielsweise einem Transformator zugeordnet ist, mag die Schalteinheit wenigstens eines der Schaltpole die folgende, vorzugsweise Reihenfolge an Komponenten aufweisen:
Spannungswandler, Kreuzbaustein und Leistungsanschluss für Freiluftdurchführung für Transformatoranschluss, Trennerdungsschalter, Winkelelement, Stromwandler, Kupplungsstelle, Verlängerungselement, Kreuzbaustein, Leistungsschalter, Doppelabgang mit Trennerdungsschaltern und zugehörige Leistungsanschlüsse für sammelschienenseitige Freiluftdurchführungen.

Die Erfindung lehrt ferner die Verwendung eines gasisolierten Schaltfelds zur Installation in einer Freiluftschaltanlage, insbesondere eines erfindungsgemäßen Schaltfeldes.

Nachfolgend wird die Erfindung anhand einer lediglich ein Ausführungsbeispiel darstellenden Zeichnung mit mehreren Figuren näher erläutert. Es zeigen in schematischer Darstellung:
- Figur 1: eine Draufsicht eines erfindungsgemäßen Schaltfeldes in einer Schaltanlage,
- Figur 2: eine Draufsicht eines erfindungsgemäßen Schaltpols aus dem Schaltfeld nach Figur 1,
- Figur 3: eine Seitenansicht des Schaltpols nach Figur 2,
- Figur 4: eine perspektivische Ansicht einer erfindungsgemäßen Kupplungsstelle des Schaltpols aus den Figuren 2 und 3 und
- Figur 5: eine perspektivische Ansicht einer erfindungsgemäßen Schnittstelle des Schaltpols aus den Figuren 2 und 3.

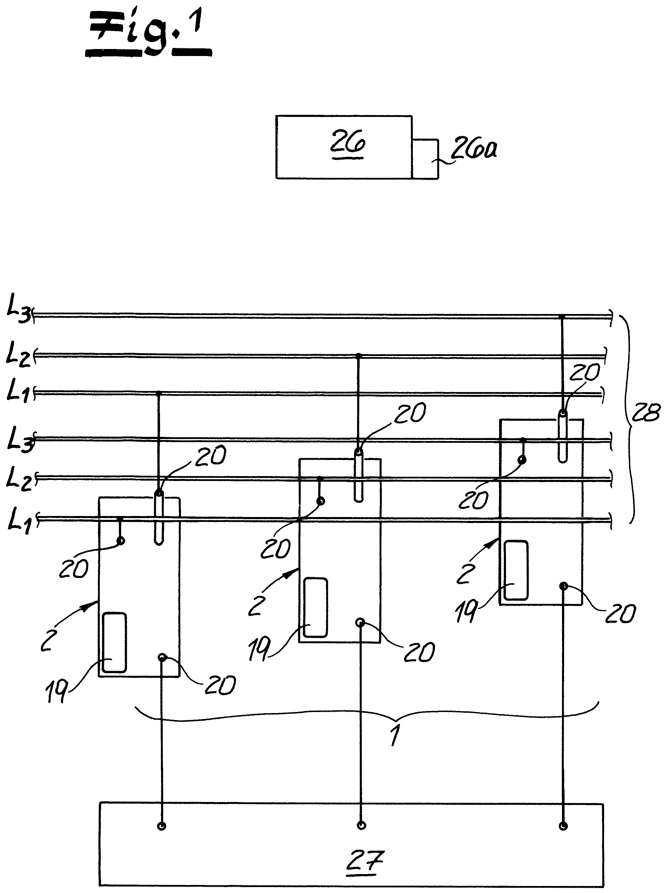

In Figur 1 ist ein Ausschnitt aus einer Schaltanlage in Form eines Umspannwerkes abgebildet. Das Umspannwerk umfasst insbesondere einen Transformator 27 sowie ein Sammelschienensystem mit sechs Sammelschienenleitern 28. Jeweils drei Sammelschienenleiter 28 sind für die drei Phasen L1, L2 bzw. L3 vorgesehen, so dass jeder Phase zwei Sammelschienenleiter 28 zugeordnet sind (s. Figur 1). Das erfindungsgemäße Schaltfeld 1 wurde nachträglich in das Umspannwerk integriert, damit dem Umspannwerk weitere Schaltmöglichkeiten zur Verfügung stehen. Damit ist das Umspannwerk flexibler geworden, sodass es besser auf die Herausforderungen der Energiewende reagieren kann und Umbaumöglichkeiten geschaffen werden.

Das Schaltfeld 1 dieses Ausführungsbeispiels umfasst drei Schaltpole 2, wobei jeder Schaltpol 2 einer Phase und damit zwei Sammelschienenleitern 28 zugeordnet ist. Hierzu weist jeder Schaltpol 2 sammelschienenseitig vorzugsweise zwei Freiluftdurchführungen 20 auf, welche den jeweiligen Schaltpol 2 mit den zwei Sammelschienenleitern 28 derselben Phase verbinden. Auf der anderen Seite ist in diesem Ausführungsbeispiel jeder Schaltpol 2 über eine weitere Freiluftdurchführung 20 mit dem Transformator 27 verbunden. In anderen Ausführungsbeispielen mögen die Schaltpole 2 mit drei Einzeltransformatoren oder anderen Komponenten als Transformatoren verbunden sein.

Es ist bevorzugt, dass jeder der drei Schaltpole 2 einen Schaltschrank 19 umfasst. Die Schaltschränke 19 dienen insbesondere der Ansteuerung der in Figur 1 der Einfachheit halber nicht dargestellten drei Schalteinheiten 3, welche jeweils einem der Schaltpole 2 zugeordnet sind. Die Freiluftdurchführungen 20 bilden die elektrischen Enden jeder der drei Schalteinheiten 3 ab. Jede der drei Schalteinheiten 3 umfasst eine Mehrzahl an Antrieben, welche elektrisch mit dem jeweiligen Schaltschrank 19 verbunden sind.

In dem vorliegenden Ausführungsbeispiel mag der mittlere Schaltpol 2 der Hauptschaltpol sein, so dass der Schaltschrank 19 des mittleren Schaltpols 2 der Hauptschaltschrank ist. Denn vorzugsweise werden elektrische Verbindungen, insbesondere Steckkabel, von den Schaltschränken 19 der beiden äußeren Schaltpole 2 zu dem Schaltschrank 19 des mittleren Schaltpols 2 geführt. Von dort führen weitere elektrische Verbindungen (ebenfalls nicht dargestellt) in diesem Ausführungsbeispiel zu einem Koppelschrank 26a einer Steuerung 26 des Schaltfeldes 1. Die Steuerung 26 dieses Ausführungsbeispiels mag in einem Container untergebracht sein und verschiedene Komponenten der Leit- und Schutztechnik aufweisen, sodass mit der Steuerung 26 alle drei Schaltpole 2 des Schaltfeldes 1 überwacht und gesteuert werden können.

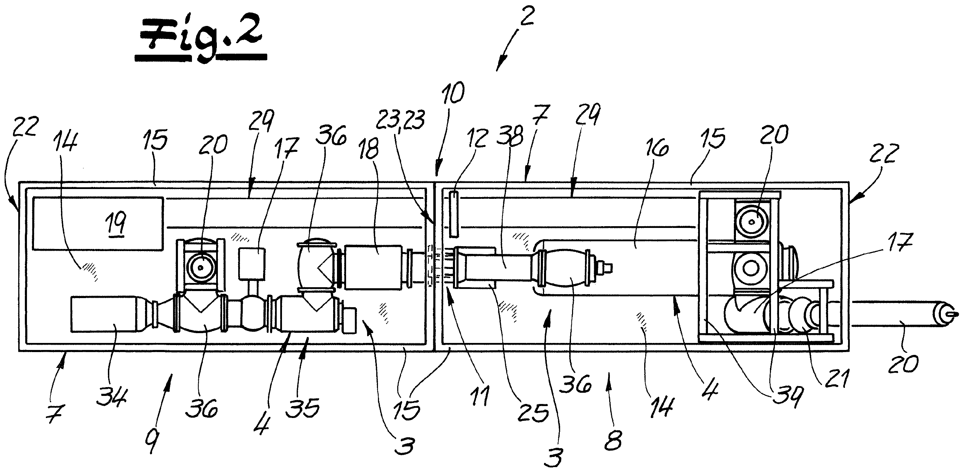

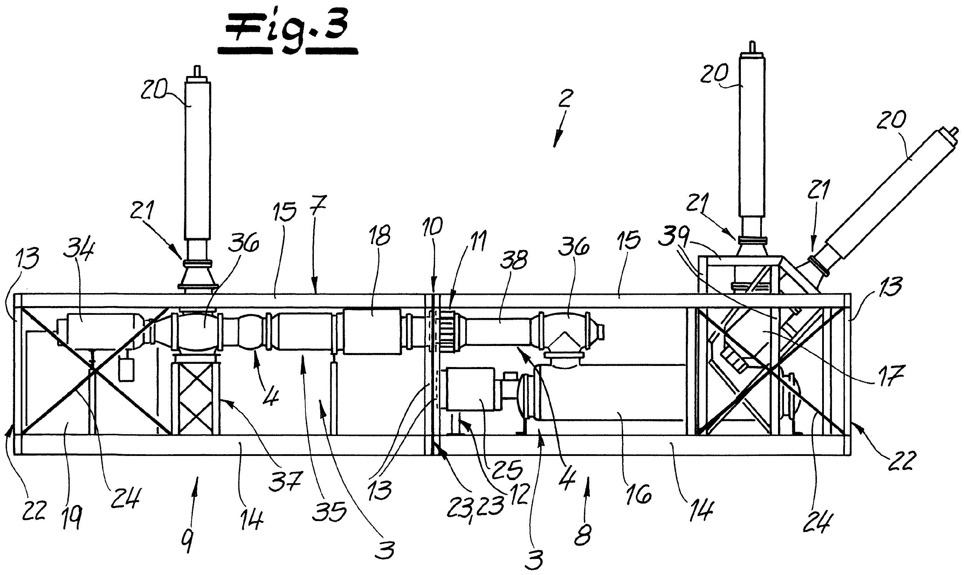

In den Figuren 2 und 3 ist ein einzelner Schaltpol 2 dieses Ausführungsbeispiels im Detail abgebildet. Dessen Schalteinheit 3 besteht aus einer länglich ausgebildeten Kapselung 4 mit einer Vielzahl an Kapselungsteilen. Innerhalb der Kapselung 4 verläuft ein nicht abgebildeter Innenleiter, welcher die transformatorseitige, linke Freiluftdurchführung 20 mit den beiden sammelschienenseitigen Freiluftdurchführungen 20 verbindet. Innerhalb der Kapselung 4 befindet sich ein Isolationsgas, welches den Innenleiter bzw. die verschiedenen Komponenten des Innenleiters von der Kapselung 4 isoliert.

Die Schalteinheit 3 bzw. der Innenleiter der Figuren 2 und 3 umfasst von links nach rechts einen Spannungswandler 34, einen Kreuzbaustein 36, einen Leistungsanschluss 21, einen Trennerdungsschalter 17, ein Winkelelement 35, einen Stromwandler 18, eine Kupplungsstelle 11, ein Verlängerungselement 38, ein Kreuzbaustein 36, einen Antrieb 25 für einen Leistungsschalter 16, einen darüber angeordneten weiteren Kreuzbaustein 36, an dessen beiden Enden jeweils ein Trennerdungsschalter 17 und ein Leistungsanschluss 21 angeordnet sind. An die Leistungsanschlüsse 21 ist jeweils eine Freiluftdurchführung 20 angeschlossen, welche ihrerseits über Leiterseile mit den Sammelschienenleitern 28 verbunden sind. Die Anbindung des Leistungsschalters 16 an die beiden Freiluftdurchführungen 20 erfolgt in diesem Ausführungsbeispiel über die Trennerdungsschalter 17, sodass entweder die eine oder die andere der beiden rechten Freiluftdurchführungen 20 aus den Figuren 2 und 3 bestromt ist. Folglich kann jeder Schaltpool 2 entweder den oberen oder den unteren im zugeordneten Sammelschienenleiter28 aus Fig. 1 mit dem Transformator 27 per entsprechendem Schaltvorgang verbinden.

Jede Schalteinheit 3 ist vorteilhafterweise von einer Begrenzung 7 in Gestalt eines Rahmens umschlossen. Hierzu besitzt die Begrenzung 7 Seitenelemente 13, welche in Form von Streben nach oben ragen und vorzugsweise die Schalteinheit 3 seitlich in allen Richtungen begrenzen. An einem oberen Ende der Seitenelemente 13 sind Deckenelemente 15 der Begrenzung 7 angeschlossen, welche die Schalteinheit 3 wenigstens abschnittsweise in Längenrichtung nach oben begrenzen. Die Deckenelemente 15 sind bevorzugt als Streben ausgebildet, welche in waagerechter Richtung verlaufen und die Seitenelemente 13 miteinander verbinden. Die Streben 13, 15 sind vorzugsweise als Vierkantrohre ausgestaltet.

Die Begrenzung 7 mag ferner wenigstens ein Bodenelement 14 umfassen, welches die Schalteinheit 3 nach unten begrenzt. Das Bodenelement 14 ist zweckmäßigerweise flächig ausgebildet und trägt die Schalteinheit 3. Die Begrenzung 7 kann diagonale Stützelemente 24 aufweisen, welche die Begrenzung 7 aussteifen. Die diagonalen Stützelemente 24 können etwa als Stützkreuze oder aber auch als Querstreben ausgebildet sein, wie sie bei Fachwerken üblich sind. Die Begrenzung 7 des Schaltpols 2 nach den Figuren 2 und 3 besitzt vorteilhafterweise die Außenmaße eines 40-Zoll-ISO-Containers, sodass die Länge der Begrenzung 7 bzw. des Schaltpols 2 insgesamt 12,2 m nicht übersteigt. Ebenso übersteigt die Breite der Begrenzung 7 bzw. des Schaltpols 2 vorzugsweise nicht das Maß von 2,43 m. Gleiches gilt für das Höhenmaß von 2,59 m.

Es ist sehr bevorzugt, dass die Schalteinheit 3 ein Winkelelement 35 umfasst, welches in der Draufsicht einen S-förmigen Knick innerhalb der Schalteinheit 3 ermöglicht, s. Figur 2. Hierdurch kann der relativ schwere Spannungswandler 34 einer Längsseite des Schaltpols 2 zugeordnet werden, sodass ausreichend Platz für den Schaltschrank 19 auf der anderen Längsseite des Schaltpols 2 vorhanden ist. Der Schaltschrank 19 ist ebenfalls relativ schwer, sodass eine gute Gewichtsverteilung bezüglich der Längsseiten des Schaltpols 2 erreicht wird. Das schwere Gewicht des Spannungswandlers 34 und des Schaltschrankes 19 wird in Längsrichtung ausgeglichen durch den schweren Stromwandler 18 und den sehr schweren Leistungsschalter 16. Durch eine ausgeglichene Gewichtsverteilung wird der Transport der Schaltpole 2 deutlich vereinfacht bzw. überhaupt erst ermöglicht.

Mit Blick auf Figur 3 ist zu erkennen, dass die Schalteinheit 3 in bevorzugt zwei Höhenebenen verläuft. In einer unteren Höhenebene befindet sich vorteilhafterweise der Leistungsschalter 16 sowie dessen Antrieb 25. Der Leistungsschalter 16 ist in dieser Ausführungsform über die beiden an ihm angeschlossenen Kreuzbausteine 36 mit den Elementen der oberen Höhenebene verbunden, in welcher sich insbesondere der Spannungswandler 34, der Stromwandler 18 sowie die Kupplungsstelle 11 befinden. Dazu wird die linke Freiluftdurchführung 20 vorzugsweise über eine Abstützung 37 aufgebockt. Ebenso werden bei diesem Ausführungsbeispiel sowohl der Spannungswandler 34 als auch der Stromwandler 18 über etwas schwächer ausgebildete Stützelemente getragen. Weiterhin ist hervorzuheben, dass die Kupplungsstelle 11 vorzugsweise an der Begrenzung 7 aufgehängt ist, worauf später noch detaillierter eingegangen wird. Der Leistungsschalter 16 mag über Fußelemente an dem Bodenelement 14 abgestützt werden. Schließlich wird der von den beiden rechten Leistungsanschlüssen 21 gebildete Doppelabgang in diesem Ausführungsbeispiel durch zusätzliche Elemente gestützt, welche nach oben über die Deckenelemente 15 der Begrenzung 7 hinausragen. Diese zusätzlichen Elemente mögen als Stützrahmen bezeichnet werden, welcher in der Draufsicht vorzugsweise innerhalb der Begrenzung 7 angeordnet ist.

Jeder Schaltpol 2 besteht aus einem ersten Modul 8 und aus einem zweiten Modul 9, sodass jeder Schaltpol 2 vorzugsweise seiner Länge nach teilbar ist. Es ist sehr bevorzugt, dass die die beiden Module 8,9 die gleiche Länge aufweisen, sodass jedes Modul den Abmessungen eines 20-Zoll-ISO-Containers entspricht. Dies ist besonders dann von Vorteil, wenn in der Schaltanlage so wenig Platz vorhanden ist, dass der Wendekreis eines Lastwagens bzw. Tiefladers mit einem 40-Zoll-ISO-Container größere Probleme bereitet oder aber sogar den Transport verunmöglicht.

Aufgrund der Teilbarkeit der Schaltpole 2 besitzt jedes Modul 8,9 eine äußere Stirnseite 22 sowie eine Koppelstirnseite 23. In diesem Ausführungsbeispiel bilden die beiden Koppelstirnseiten 23 eine Verbindungsstelle 10 der Begrenzung 7. Hierzu mögen an den beiden Koppelstirnseiten 23 entsprechende Befestigungselemente vorgesehen sein, welche vorteilhafterweise eine schnelle und reversible Befestigung der Koppelstirnseiten 23 ermöglichen. Dies kann beispielsweise über vorinstallierte Schraubverbindungen geschehen.

Es ist sehr bevorzugt, dass die Schalteinheit 3 die Kupplungsstelle 11 aufweist, welche in diesem Ausführungsbeispiel als Schiebeadapter ausgebildet ist. Die Kupplungsstelle 11 ermöglicht eine schnelle Verbindung der beiden Abschnitte der Schalteinheit 3 in den beiden Modulen 8,9. In diesem Ausführungsbeispiel verbindet die Kupplungsstelle 11 den Stromwandler 18 mit dem Verlängerungselement 38, was am besten in den Figuren 2, 3 und 4 zu erkennen ist.

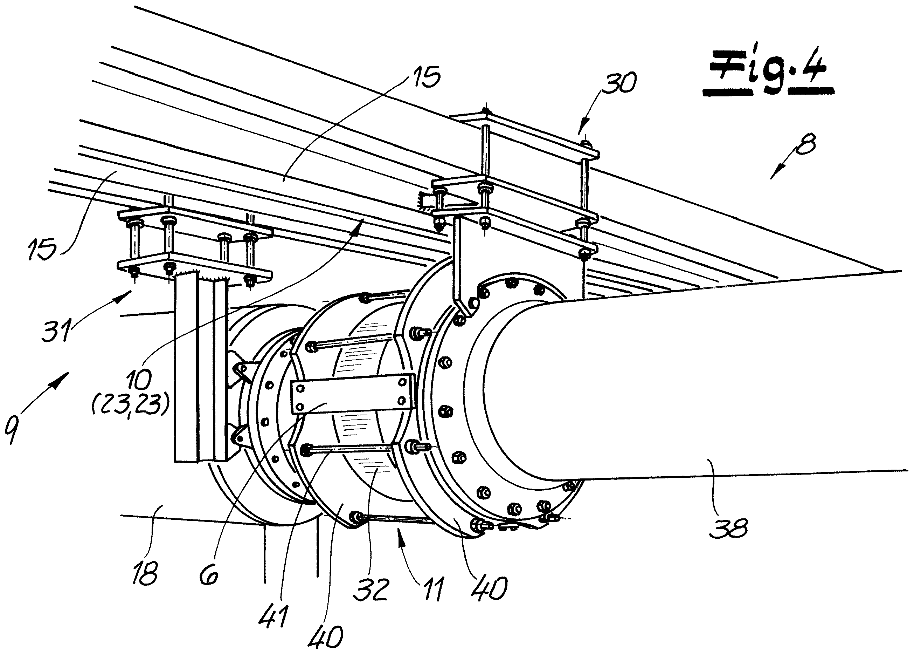

Figur 4 zeigt einen vergrößerten, perspektivischen Ausschnitt der Schalteinheit 3 im Bereich der Kupplungsstelle 11. In der Mitte der Kupplungsstelle 11 befindet sich eine Manschette 32 aus Gummi, welche über Axialverbindungen 41, z.B. Schraubverbindungen, in entsprechenden, zugeordneten Flanschen 40 einem Anpressdruck ausgesetzt wird. Die Manschette 32 wird vorzugsweise außen auf jeder Seite der Kupplungsstelle 11 zum Zwecke der Erdung bzw. Potentialnivellierung der Kapselung 4 von einer Kurschlussverbindung 6 in Form eines Kupferbandes überbrückt.

Die Kupplungsstelle 11 wird gemäß Figur 4 bevorzugt von zwei Aufhängungen 30, 31 bzw. von Deckenelementen 15 der Koppelstirnseiten 23 der beiden Module 8, 9 getragen. Eine erste Aufhängung 30 ist einem Deckenelement 15 des ersten Moduls 8 zugeordnet und weist in diesem Ausführungsbeispiel mehrere Schraubverbindungen auf. Die Aufhängung 30 ermöglicht vorteilhafterweise Freiheitsgrade in alle Richtungen, sodass die Aufhängung 30 eine mechanisch spannungsfreie Befestigung des Verlängerungselements 38 bzw. der Kupplungsstelle 11 ermöglicht. Die Aufhängung 30 ist in diesem Ausführungsbeispiel oberhalb des Verlängerungselements 38 bzw. der Kupplungsstelle 11 angeordnet.

Die Aufhängung 31 ist in Figur 4 einem Deckenelement 15 des zweiten Moduls 9 zugeordnet bzw. an diesem befestigt. Die Aufhängung 31 umfasst zwei nach unten ragende Streben, wobei vorzugsweise jede der beiden Streben an einer der beiden Seiten der Kupplungsstelle 11 bzw. des Stromwandlers 18 angeordnet ist (zweite Strebe ist in Figur 4 verdeckt). Auch die beiden nach unten ragenden Streben der Aufhängung 31 können in einem gewissen Rahmen alle Freiheitsgrade zur Positionierung ausnutzen, sodass vorzugsweise auch die Aufhängung 31 eine mechanisch spannungsfreie Befestigung der Schalteinheit 3 bzw. der Kupplungsstelle 11 bzw. des Stromwandlers 18 an der Begrenzung 7 ermöglicht. Die beiden Streben der Aufhängung 31 sowie die Aufhängung 30 stellen folglich eine Drei-Punkt-Befestigung der Schalteinheit 3 dar.

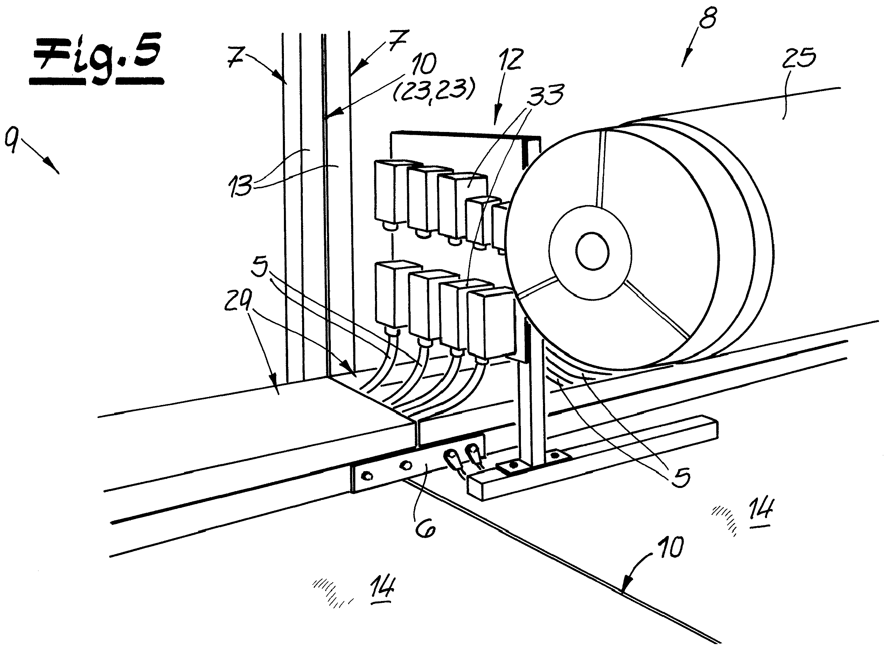

In Figur 5 ist der Antrieb 25 des Leistungsschalters 16 zu erkennen, neben welchem in diesem Ausführungsbeispiel eine Schnittstelle 12 für eine Mehrzahl an elektrischen Kabeln 5 angeordnet ist. Die Kabel 5 werden bevorzugt in Kabelschächten 29 der beiden Module 8,9 geführt, wie dies insbesondere aus Figur 2 hervorgeht. Dort ist auch die Position der Schnittstelle 12 innerhalb des Schaltpols 2 zu erkennen. Die Schnittstelle 12 ist gemäß Figur 5 vorzugsweise als Steckertafel ausgebildet, welche zweckmäßigerweise senkrecht ausgerichtet ist und sich im Bereich der Koppelstirnseiten 23 auf der Seite des Moduls 8 befinden mag. Die beiden Seiten der Schnittstelle 12 bzw. Steckertafel sind bevorzugt einerseits dem Modul 9 bzw. dem Schaltschrank 19 und andererseits dem Doppelabgang des Moduls 8 zugewandt.

Jede der beiden Seiten der Schnittstelle 12 umfasst vorteilhafterweise eine Mehrzahl an Steckerplätzen 33, sodass jede der beiden Seiten der Schnittstelle 12 mit einer Vielzahl an Kabeln 5 verbunden werden kann, s. Figur 5. Insbesondere können zahlreiche, vom Schaltschrank 19 ausgehende Kabel 5 mit der Schnittstelle 12 verbunden werden. Weitere Kabel 5 werden mit weiteren Steckerplätzen 33 auf der in Figur 5 abgewandten Seite der Schnittstelle 12 verbunden und laufen beispielsweise bis zum Doppelabgang, um die dortigen Trennerdungsschalter 17 mit dem Kabelschrank 19 zu verbinden. Auf diese Weise gewährleistet die Schnittstelle 12 eine sehr schnelle und reversible Trennung der Kabel 5 zwischen den Modulen 8,9. Die Stecker der Kabel 5 sind vorzugsweise freilufttauglich, verpolungssicher und codierbar bezüglich der Kabelpole.

**Bezugszeichen:**

| B.Z | Bezeichnung | B.Z | Bezeichnung |
|---|---|---|---|
| 1 | Schaltfeld | 26 | Steuerung |
| 2 | Schaltpol | 27 | Transformator |
| 3 | Schalteinheit | 28 | Sammelschienenleiter |
| 4 | Kapselung | 29 | Kabelschacht |
| 5 | Kabel | 30 | Aufhängung des ersten Moduls |
| 6 | Kurzschlussverb | 31 | Aufhängung des zweiten Moduls |
| 7 | Begrenzung | 32 | Manschette |
| 8 | erstes Modul | 33 | Steckerplatz |
| 9 | zweites Modul | 34 | Spannungswandler |
| 10 | Verbindungsstelle | 35 | Winkelelement |
| 11 | Kupplungsstelle | 36 | Kreuzbaustein |
| 12 | Schnittstelle | 37 | Abstützung |
| 13 | Seitenelement | 38 | Verlängerungselement |
| 14 | Bodenelement | 26a | Koppelschrank |
| 15 | Deckenelement | 39 | Stützrahmen |
| 16 | Leistungsschalter | 40 | Flansch von 11 |
| 17 | Trennerdungsschalter | 41 | Axialverbindung |
| 18 | Stromwandler | | |
| 19 | Schaltschrank | | |
| 20 | Freiluftdurchführung | | |
| 21 | Leistungsanschluss | | |
| 22 | äußere Stirnseite | | |
| 23 | Koppelstirnseite | | |
| 24 | diagonales Stützelement | | |
| 25 | Antrieb | | |

## Patentansprüche

1. Mobiles, gasisoliertes Schaltfeld (1) für die Hoch- oder Höchstspannung, umfassend wenigstens zwei mobile Schaltpole (2), wobei die zwei Schaltpole (2) jeweils eine Schalteinheit (3) aufweisen, wobei jede der zwei Schalteinheiten (3) jeweils einen Innenleiter zur Führung von Strömen im Hoch- oder Höchstspannungsbereich sowie eine gasdichte Kapselung (4) aufweist, wobei jeder der Innenleiter von der jeweiligen Kapselung (4) umschlossen ist, wobei ein Zwischenraum zwischen dem Innenleiter und der jeweiligen Kapselung (4) mit einem Isolationsgas befüllbar bzw. befüllt ist, so dass jeder der Innenleiter gasisolierbar bzw. gasisoliert ist,
**dadurch gekennzeichnet, dass**
die zwei Kapselungen (4) nicht über ein gemeinsames Kapselungsteil oder mehrere gemeinsame Kapselungsteile miteinander verbunden sind, so dass die beiden Kapselungen (4) unabhängig voneinander sind.

2. Schaltfeld (1) nach Anspruch 1, wobei bauliche Verbindungen zwischen den Schaltpolen (2) fehlen.

3. Schaltfeld (1) nach einem der Ansprüche 1 oder 2, wobei wenigstens einer der Schaltpole (2) eine Begrenzung (7) umfasst, wobei die Begrenzung (7) die Kapselung (4) bzw. die Schalteinheit (3) dieses Schaltpols (2) wenigstens abschnittsweise in wenigstens zwei und vorzugsweise in drei Dimensionen umgreift.

4. Schaltfeld (1) nach einem der Ansprüche 1 bis 3, wobei wenigstens einer der Schaltpole (2) in ein erstes Modul (8) und ein zweites Modul (9) teilbar ist.

5. Schaltfeld (1) nach einem der Ansprüche 1 bis 4, wobei wenigstens einer der Schaltpole (2) in der Draufsicht ein Verhältnis von der Länge L zu der Breite B größer 2, vorzugsweise größer 3 und besonders vorzugsweise größer 4 aufweist.

6. Schaltfeld (1) nach einem der Ansprüche 4 oder 5, wobei die Begrenzung (7) wenigstens eines der Schaltpole (2) eine Verbindungsstelle (10) umfasst, wobei die Verbindungsstelle (10) eine Verbindung der Module (8, 9) darstellt.

7. Schaltfeld (1) nach einem der Ansprüche 4 bis 6, wobei die Schalteinheit (3) wenigstens eines der Schaltpole (2) eine Kupplungsstelle (11) aufweist, wobei die Kupplungsstelle (11) eine Verbindung der Module (8, 9) darstellt.

8. Schaltfeld (1) nach einem der Ansprüche 4 bis 7, wobei wenigstens einer der Schaltpole (2) eine elektrische Schnittstelle (12) für eine Mehrzahl an elektrischen Kabeln (5) aufweist, wobei die Schnittstelle (12) eine Verbindung der Module (8, 9) darstellt.

9. Schaltfeld (1) nach einem der Ansprüche 1 bis 8, wobei untere Abschnitte der Schalteinheit (3) in einer unteren Ebene und obere Abschnitte der Schalteinheit (3) in einer oberen Ebene angeordnet sind.

10. Schaltfeld (1) nach einem der Ansprüche 3 bis 9, wobei die Begrenzung (7) wenigstens ein Seitenelement (13) und/oder wenigstens ein Bodenelement (14) und/oder wenigstens ein Deckenelement (15) umfasst.

11. Schaltfeld (1) nach einem der Ansprüche 1 bis 10, wobei die Kapselung (4) wenigstens stellenweise aufgehängt ist.

12. Schaltfeld (1) nach einem der Ansprüche 1 bis 11, wobei wenigstens einer der Schaltpole (2) einen Schaltschrank (19) umfasst.

13. Schaltfeld (1) nach einem der Ansprüche 1 bis 12, wobei die Schaltpole (2) über elektrische Verbindungen (5) der Sekundärtechnik miteinander verbunden sind.

14. Schaltfeld (1) nach einem der Ansprüche 1 bis 13, wobei die Schalteinheit (3) von wenigstens einem der Schaltpole (2) wenigstens einen Leistungsschalter (16) und/oder wenigstens zwei Trennerdungsschalter (17) und/oder einen Stromwandler (18) und/oder einen Spannungswandler (34) und/oder ein Verlängerungselement (38) umfasst.

15. Verwendung eines gasisolierten Schaltfelds (1) zur Installation in einer Freiluftschaltanlage, insbesondere eines Schaltfeldes (1) nach einem oder mehreren der Merkmale nach einem der Ansprüche 1 bis 14.
